# EUROPEAN PATENT APPLICATION

(11) **EP 2 341 269 A1**
(43) Date of publication of application: **06.07.2011**
(21) Application number: 09425527.0
(22) Date of filing: 22.12.2009
(51) Int. Cl.: F16K 5/06, F16K 5/20

(54) **Trunnion-mounted ball valve with reverse-piston effect**

(71) Applicant: Valbart S.r.l., 20050 Mezzago (IT)
(72) Inventor: Seveso, Albert, 20050 Mezzago (MI) (IT); Ivanescu, Gabriel, 20050 Mezzago (MI) (IT)
(74) Representative: Marchitelli, Mauro

(57) **Abstract**

A trunnion-mounted ball valve, comprising:
- a valve body (12) including a central body (14) and two opposite tubular sections (16), the central body (14) having a body cavity (20) and the tubular sections (16) having respective ducts (22) with a common longitudinal axis (A) and respective inner ends facing said body cavity (20),
- a trunnion-mounted ball (24) rotatably connected to the valve body (12) and rotatable about an axis of rotation (B) orthogonal to said longitudinal axis (A) between an open position and a closed position, the ball (24) having a through hole (34) which is aligned to said ducts (22) in the open position and transversal to said ducts (22) in the closed position,
- a first and a second seat ring (36, 38) each of which has a guide portion (44) slidably engaging a respective tubular section (16) in the direction of said longitudinal axis (A) and a head portion (46), wherein one of said seat rings (36) has:
- a ball-side seal (54, 64) provided on said head portion (46), which establishes a sealing contact between the seat ring (36) and the ball (24) along a ball-side sealing diameter (D1), and
- a body-side seal (58), provided on said guide portion (44), which establishes a sealing contact with a respective tubular section (16) on a body-side sealing diameter (D2), wherein the ball-side sealing diameter (D1) and the body-side sealing diameter (D2) are constant,

wherein the ball-side sealing diameter (D1) is greater than the body-side sealing diameter (D2).

## Description

### Background of the invention

The present invention relates to trunnion-mounted ball valves for pipelines.

The invention has been developed in particular for ball-valves used for the connection between a pipeline and a chamber located at the end of the pipeline used for launching or receiving a scrapper (usually called "pig") .

A trunnion-mounted ball valve for pipelines usually has a valve body having a body cavity, a trunnion-mounted ball rotatably mounted in the body cavity and two independent, floating seat rings having respective valve seats which ensure bi-directional tightness of the valve. A first seat ring is provided for ensuring tightness between the pipeline and the body cavity and the second seat ring is provided for ensuring a seal between the pig chamber and the body cavity.

In order to prevent early wearout to the valve seats of the seat rings, opening and closing of the valve should be made when the pressures in the pipeline, pig chamber and body cavity are substantially equalised. This usually requires an auxiliary circuit for equalising the pressure in the body cavity. Such auxiliary circuit increases the cost and the complexity of the valve and also increases the complexity of the valve operation as well. However, even when an auxiliary equalising circuit is present, there is still the risk of damaging the valve seats if the operators fail to equalise the pressure in the body cavity before opening or closing the valve.

### Object and summary of the invention

The object of the present invention is to provide a trunnion-mounted ball valve which overcomes the above problem.

In accordance with the present invention, this object is achieved by a trunnion-mounted ball valve according to claim 1.

### Brief description of the drawings

The present invention will now be described with reference to the appended drawings, given purely by way of non-limiting example, wherein:
- figure 1 is a longitudinal cross-section showing a ball valve mounted between a pipeline and a pig chamber,
- figure 2 is a longitudinal cross-section of an embodiment of a ball valve according to the present invention,
- figure 3 is an enlarged view of the part indicated by the arrow III in figure 2,
- figure 4 is a view corresponding to figure 3 and showing an alternative embodiment,
- figures 5 to 10 show different embodiments of the part indicated by the arrow III in figure 2.

### Description of preferred embodiments

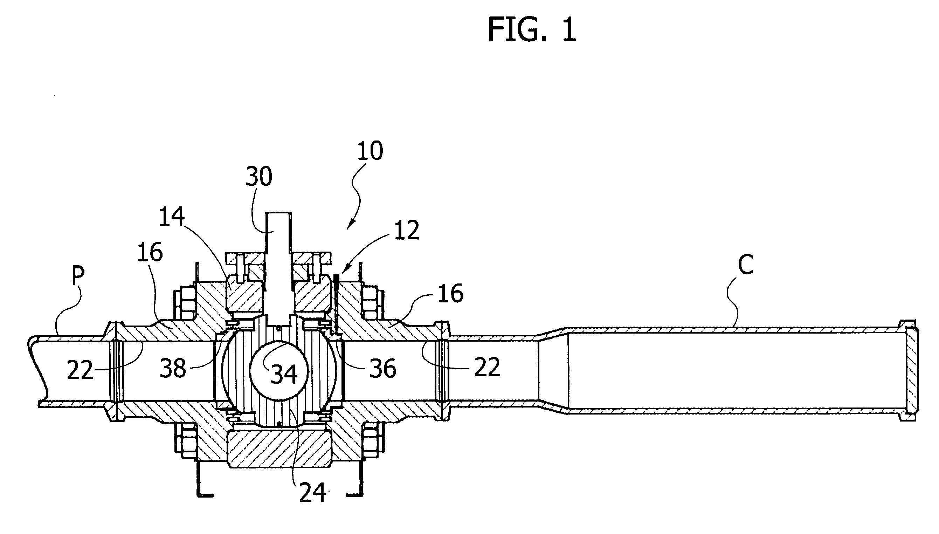

Referring to figure 1, a trunnion-mounted ball valve 10 according to the present invention is mounted between a pipeline P and a pig chamber C. The purpose of the valve 10 is to safely isolate the chamber C from the pipeline P with two independent sealing elements. The valve 10 must ensure that the chamber C is isolated from the pressure in the pipeline P even in case of failure of one of the two sealing elements.

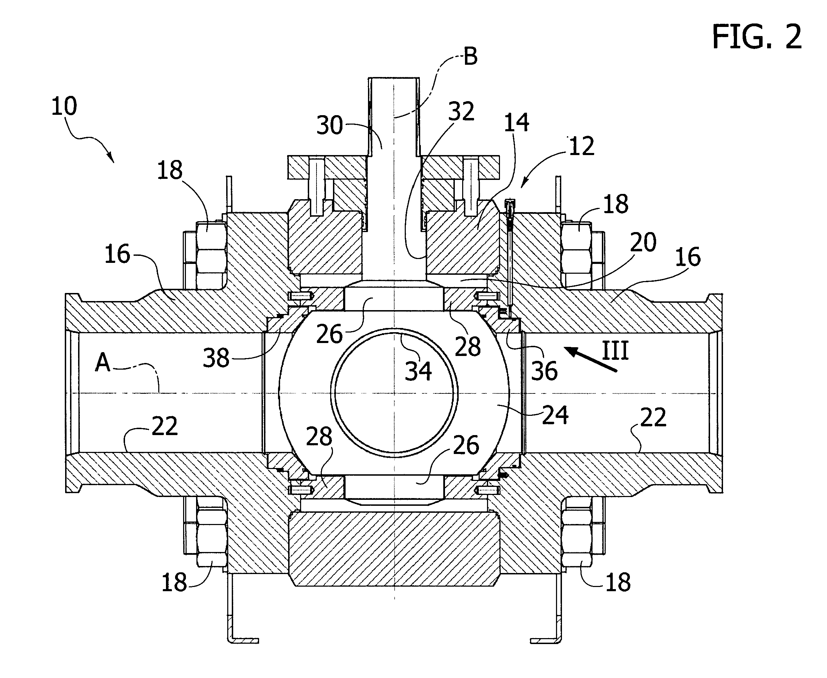

The structure of the valve 10 is shown in greater detail in figure 2. The valve 10 comprises a valve body 12 including a central body 14 and two tubular sections 16 set on opposite sides of the central body 14 and fixed thereto by means of bolts 18. The central body 14 has a body cavity 20 and the tubular sections 16 have respective ducts 22 with respective inner ends facing the body cavity 20. The ducts 22 have the same diameter and a common longitudinal axis A.

A ball 24 is housed in the body cavity 20 of the central body 14. The ball 24 has two integral trunnions 26 which rotatably engage respective supports 28 fixed to the valve body 12. The ball 24 is rotatable with respect to the valve body 12 about an axis of rotation B which is orthogonal to the longitudinal axis A. A stem 30 extends coaxially to the axis of rotation B through a bore 32 of the central body 14 and is fixed to one of the trunnions 26. The ball 24 has a through hole 34 having a diameter which is substantially equal to the diameter of the ducts 22. The ball is rotatable about the axis of rotation B between on open position in which the through hole 34 is aligned to the ducts 22 and a closed position in which the through hole 34 is transversal to the ducts 22.

The valve 10 comprises a first and a second seat ring 36, 38 having respective inner diameters equal to or greater than the diameter of the ducts 22. The seat rings 36, 38 are free to move along the longitudinal axis A and are provided with respective valve seats which abut on opposite sides of the ball 24.

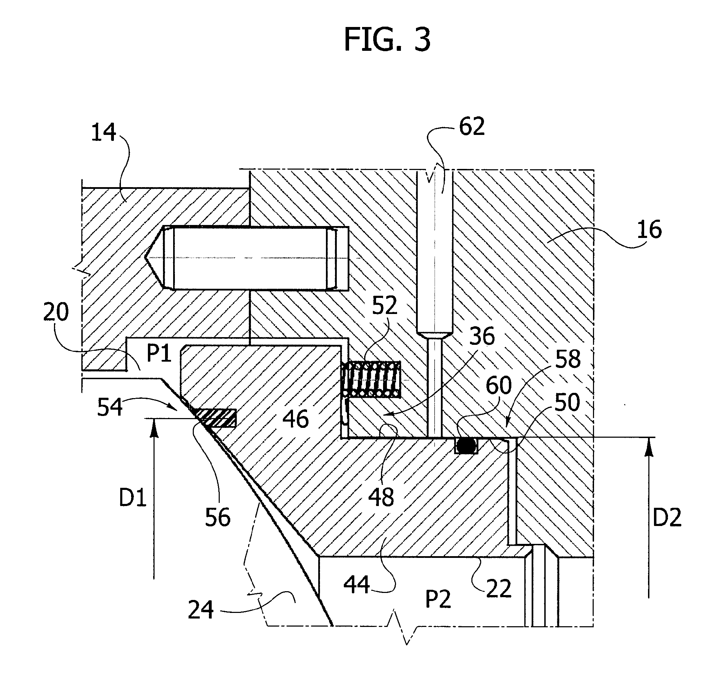

Referring to figure 3, the first seat ring 36 comprises an integral body made of metallic material and having a guide portion 44 and a head portion 46. The guide portion 44 has a cylindrical guide surface 48 which slidably engages a corresponding cylindrical guide surface 50 of the tubular section 16. A set of compression springs 52 is set between mutually facing radial surfaces of the seat ring 36 and tubular section 16. The compression springs 52 bias the seat ring 36 towards the ball 24.

The seat ring 36 has a ball-side seal 54 which establishes a sealing contact between the seat ring 36 and the ball 24 along a ball-side sealing diameter D1. In the embodiment shown in figure 3 the ball-side seal 54 is formed by a soft annular insert 56 coaxial with the longitudinal axis A which is housed in an annular groove formed on a surface of the head portion 46 of the seat ring 36 facing the ball 24. The annular insert 56 has a front surface abutting the ball 24. The sealing element 56 can be made of plastic material.

The seat ring 36 has a body-side seal 58 provided between the guide surfaces 48, 50. The body-side seal 58 establishes a sealing contact between the seat ring 36 and the respective tubular section 16 along a body-side sealing diameter D2. In the embodiment shown in figure 3, the body-side seal 58 includes an O-ring 60 housed into an annular groove formed in the guide portion 44 of the seat ring 36.

The ball-side sealing diameter D1 and the body-side sealing diameter D2 are both constant. This means that the sealing diameters D1 and D2 do not vary depending on the differential pressure in the body cavity 20 and in the respective duct 22.

In accordance with the present invention, the ball-side sealing diameter D1 is greater than the body-side sealing diameter D2.

The fluid pressure in the body cavity 20 is indicated P1 and the fluid pressure in the duct 22 (equal to the fluid pressure in the pig chamber C) is indicated P2. When P1 is greater than P2, the resultant of the fluid pressures acting on the seat ring 36 is directed towards the ball 24. Therefore, in this condition the ball-side seal 54 is closed.

When P2 is greater than P1, the resultant of the fluid pressures acting on the seat ring 36 is directed away from the ball 20. In this case, when the resultant of the fluid pressures is equal to or greater than the force of the compression springs 52, the ball-side seal 54 is open and the pressures P1 and P2 tend to equalise.

A seat ring 36 according to the present invention is defined as having "reverse piston effect" because the seat ring 36 is subjected to a fluid force directed in a longitudinal direction towards the area with greater pressure. In fact, the resultant of pressure forces is directed towards the ball 24 when the prevailing pressure is P1 and away from the ball 24 when the prevailing pressure is P2.

It is particularly advantageous to use a seat ring 36 with reverse piston effect on the side of the pig chamber C. In fact, when the valve is closed and P1 is greater than P2, the seat ring 36 ensures that the ball-side seal 54 is closed even in case of failure of the valve seat on the pipeline side. In fact, if there is a leak on the seat ring 38 on the pipeline side, the pressure P1 in the body cavity 20 increases. The reverse piston effect on the seat ring 36 on the pig chamber side ensures a safer operation of the pig chamber.

On the other hand, when the valve is closed, the seat ring 36 with reverse piston effect ensures a self-equalisation of the pressures P1 and P2 when the pig chamber C is pressurised. Therefore, it is ensured that the opening of the valve 10 is carried out in a condition of substantial equalisation between the pressures P1 and P2, which substantially reduces the risk of damages of the ball-side seal 54.

Preferably, a test port 62 is provided for sensing the fluid pressure close to the body side seal 58. The pressure measured in the test port 62 provides information on the integrity of the seals 54, 58.

The seat ring 38 on the pipeline side is preferably a seat ring with simple piston effect or double piston effect according to the prior art.

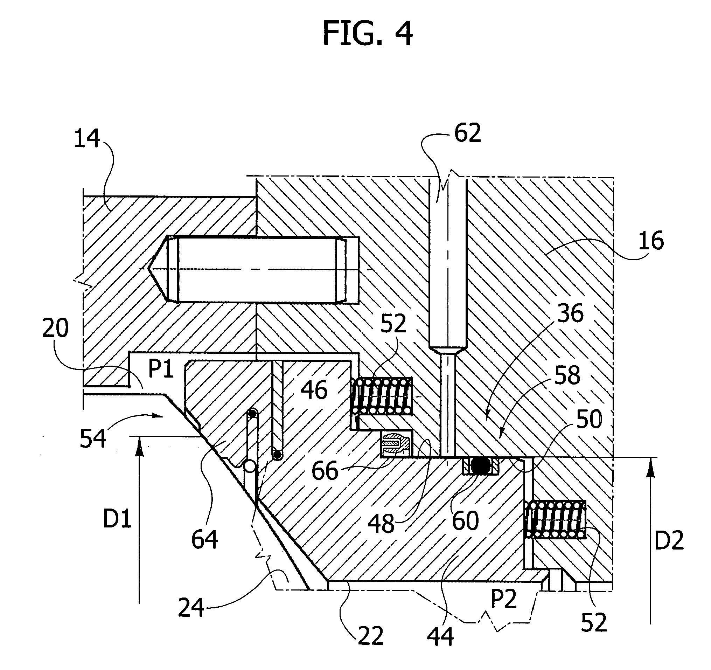

Figure 4 shows an alternative embodiment of a seat ring 36 with reverse piston effect according to the present invention. The elements corresponding to those previously described are indicated by the same reference numerals.

The seat ring 36 shown in figure 4 has a head portion 46 with a flexible valve seat 64 as disclosed in EP 09 425 312 of the same applicant. A valve seat 64 is integrally formed on a surface of the head portion 46. The sealing contact between the seat ring 36 and the ball 24 is metal-to-metal.

A remarkable advantage of a seat ring with reverse piston effect according to the present invention is that the body-side seal 58 can be formed by two independent sealing elements having the same body-side sealing diameter D2. The fact that the body-side sealing diameter D2 remains constant makes it possible to provide two independent sealing elements on the body-side seal 58.

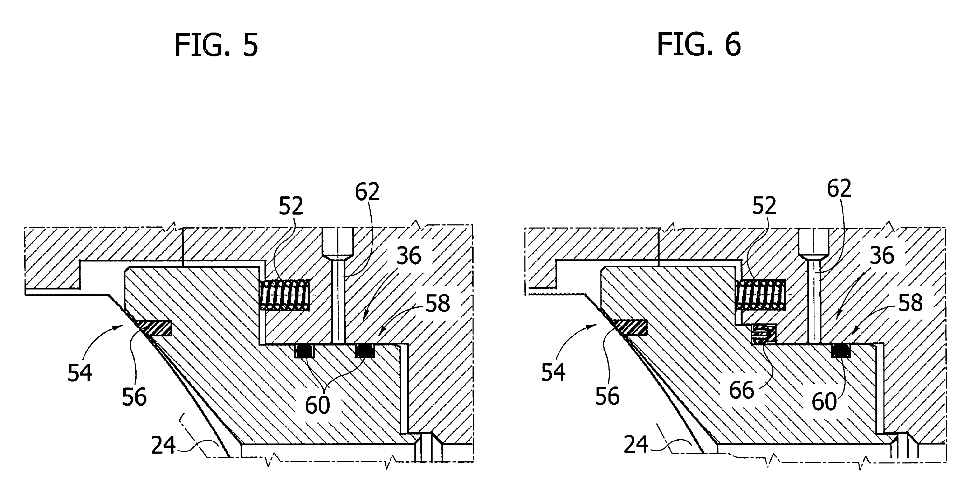

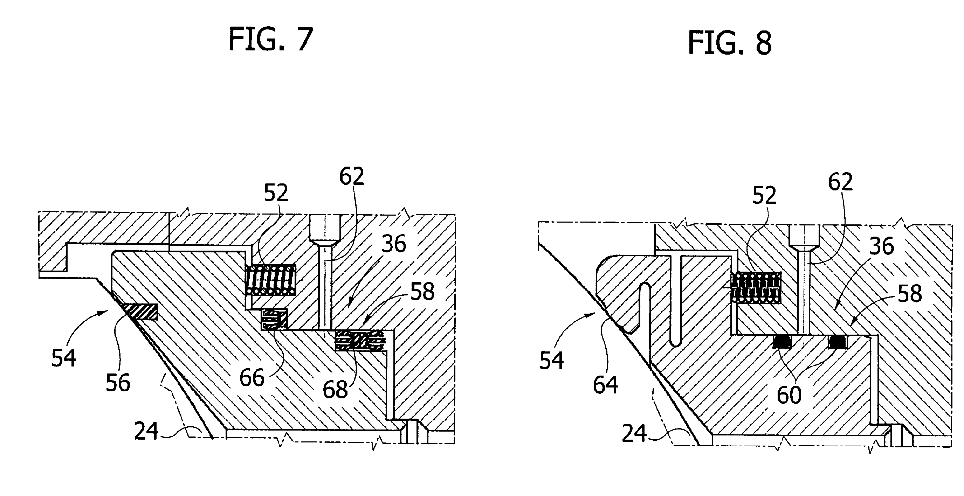

Figures 5 to 10 show different solutions wherein the body-side seal 58 includes two independent sealing elements. Figures 5 to 7 show a seat ring with a soft insert 56 forming the ball-side seal 54. Figures 8 to 10 show a seat ring with flexible valve seat 64 and metal-to-metal sealing contact on the ball-side seal 54.

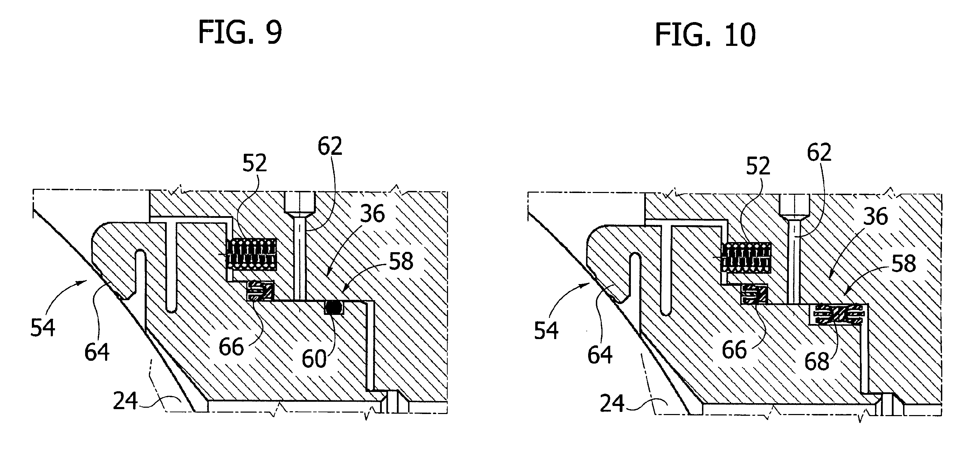

In figures 5 and 8 the body-side seal 58 includes two o-rings 60 housed in respective annular grooves spaced apart from each other in a longitudinal direction. In figures 6 and 9 the body-side seal 58 includes an o-ring 60 and a lip seal 66.

In figures 7 and 10 the body-side seal 58 includes two independent lip seals 66, 68. The lip seal 68 shown in the drawings is a double lip seal.

In all the embodiments wherein the body-side seal 58 includes two independent sealing elements the test port 62 is arranged for sensing the pressure between the two sealing elements. The pressure measured in the test port 62 provides information on the integrity of the sealing elements forming the body-side seal 58.

## Claims

1. A trunnion-mounted ball valve, comprising:
- a valve body (12) including a central body (14) and two opposite tubular sections (16), the central body (14) having a body cavity (20) and the tubular sections (16) having respective ducts (22) with a common longitudinal axis (A) and respective inner ends facing said body cavity (20),
- a trunnion-mounted ball (24) rotatably connected to the valve body (12) and rotatable about an axis of rotation (B) orthogonal to said longitudinal axis (A) between an open position and a closed position, the ball (24) having a through hole (34) which is aligned to said ducts (22) in the open position and transversal to said ducts (22) in the closed position,
- a first and a second seat ring (36, 38) each of which has a guide portion (44) slidably engaging a respective tubular section (16) in the direction of said longitudinal axis (A) and a head portion (46), wherein one of said seat rings (36) has:
- a ball-side seal (54, 64) provided on said head portion (46), which establishes a sealing contact between the seat ring (36) and the ball (24) along a ball-side sealing diameter (D1), and
- a body-side seal (58), provided on said guide portion (44), which establishes a sealing contact with a respective tubular section (16) on a body-side sealing diameter (D2), wherein the ball-side sealing diameter (D1) and the body-side sealing diameter (D2) are constant,
**characterised in that** the ball-side sealing diameter (D1) is greater than the body-side sealing diameter (D2).

2. A trunnion-mounted ball valve according to claim 1, **characterised in that** the body-side seal (58) includes two independent sealing elements (60, 66, 68) acting on the same body-side sealing diameter (D2).

3. A trunnion-mounted ball valve according to claim 2, **characterised in that** the body-side seal (58) includes two o-rings (60) housed in respective annular grooves spaced apart from each other in a longitudinal direction.

4. A trunnion-mounted ball valve according to claim 2, **characterised in that** the body-side seal (58) includes an o-ring (60) and a lip seal (66).

5. A trunnion-mounted ball valve according to claim 2, **characterised in that** the body-side seal (58) includes two independent lip seals (66, 68).

6. A trunnion-mounted ball valve according to any of claims 2 to 5, **characterised in that** a test port (62) is provided for sensing the pressure between said independent seal elements (60, 66, 68).

7. A trunnion-mounted ball valve according to claim 1, **characterised in that** the ball-side seal (54) includes a soft insert (56).

8. A trunnion-mounted ball valve according to claim 1, **characterised in that** the ball-side seal (54) includes a metal-to-metal valve seat (64).
